Europäisches Patentamt

European Patent Office

Office européen des brevets

(11) Numéro de publication: **0 496 328 A1**

# DEMANDE DE BREVET EUROPEEN

(21) Numéro de dépôt: **92100867.8**

(22) Date de dépôt: **20.01.92**

(51) Int. Cl.5: **B01D 71/72**, B01D 69/10,
B01D 69/12, C08G 79/02,
B01D 67/00, B01D 63/06

(30) Priorité: **22.01.91 FR 9100679**

(43) Date de publication de la demande:
**29.07.92 Bulletin 92/31**

(84) Etats contractants désignés:
**CH DE DK FR GB IT LI NL**

(71) Demandeur: **SOCIETE DES CERAMIOUES
TECHNIOUES**

**F-65460 Bazet(FR)**

(72) Inventeur: **Soria, Raymond**
**23bis route d'Oursbellile**
**F-65460 Bazet(FR)**
Inventeur: **Defalque, Corinne**
**Résidence Gally, 97 rue du Maquis de
Payolle**
**F-65000 Tarbes(FR)**
Inventeur: **Gillot, Jacques**
**5 impasse de la Hount**
**F-65310 Odos(FR)**

(74) Mandataire: **Weinmiller, Jürgen et al**
**Lennéstrasse 9 Postfach 24**
**W-8133 Feldafing(DE)**

(54) **Membrane pour un dispositif de filtration, de séparation de gaz ou de liquide, de pervaporation et procédé de fabrication d'une telle membrane.**

(57) Membrane comportant au moins une couche poreuse en matériau inorganique choisi parmi la céramique frittée, le métal fritté, le verre fritté, le carbone, et une couche séparatrice en polyphosphazène, cette membrane étant caractérisée notamment par le fait, que le diamètre moyen des pores de ladite couche poreuse en matériau inorganique est compris entre 10nm et 0,1μm, que ladite couche séparatrice est continue et pénètre dans ladite couche inorganique suivant une épaisseur comprise entre deux et cinq fois la valeur dudit diamètre de pores de ladite couche poreuse inorganique.

La présente invention concerne une membrane pour un dispositif de filtration, de séparation de gaz ou de liquide, de pervaporation. A titre d'exemple un tel dispositif comprend un bloc macroporeux, encore appelé support, en matériau céramique fritté, en métal fritté, en verre fritté ou en carbone (ces différents matériaux sont désignés ci-dessous sous le nom "inorganique"), percé de un ou plusieurs canaux longitudinaux et parallèles dont la surface est recouverte d'une membrane.

On connaît des membranes minérales constituées d'un matériau inorganique, mais la couche séparatrice poreuse ne permet pas la rétention de molécules caractérisées par une masse moléculaire inférieure à 1000 daltons environ, en solution dans un solvant de masse moléculaire plus faible (200 daltons et moins), ni a fortiori la séparation des gaz par un mécanisme plus sélectif que la séparation par effet de masse moléculaire en écoulement dans un régime de KNUDSEN. Par contre, ce type de membrane présente un comportement excellent vis-à-vis d'une élévation de température, d'une agression chimique, et d'une forte différence de pression.

Pour la rétention de petites molécules (de masse moléculaire inférieure à 1000 daltons), on connaît par ailleurs des membranes organiques utilisées également pour l'osmose inverse. D'une manière générale, les membranes organiques ont l'inconvénient d'être fragiles mécaniquement, de ne pas supporter une élévation de température (telle que subie lors de la stérilisation à la vapeur) ou un milieu agressif (tel que les acides ou les bases concentrés utilisés au cours du nettoyage chimique), du moins pendant les durées de l'ordre d'une à plusieurs années exigées des installations de séparation par membrane.

On a proposé également des membranes dont le support est un matériau poreux inorganique et dont la couche séparatrice est composée d'un matériau résineux polymérique.

Ainsi le brevet français FR-A- 2 575 398 décrit un filtre constitué d'un substrat en céramique poreuse et d'une membrane microporeuse en un matériau résineux polymérique. Ce brevet propose la fabrication de couche de matériau résineux de haut poids moléculaire. Cette couche dont le diamètre de pores est supérieur ou égal à 0,1μm est située en partie sur la couche support en céramique, et en partie dans les pores de la couche support en céramique, c'est-à-dire qu'elle est partiellement infiltrée dans les pores de cette couche, ce qui réduit les performances de débit du dispositif de filtration.

Le brevet japonais 59/206 008 décrit la dépose d'une couche polymérique microporeuse sur un support céramique. Cette fabrication nécessite le bouchage des pores du support avant la mise en place de la couche organique, puis la dissolution du matériau bouche-pore après cette mise en place. Ce procédé de fabrication présente bien des inconvénients. En effet, il nécessite des étapes supplémentaires et la couche obtenue n'est pas parfaitement liée au support céramique, et, de ce fait, est très fragile. D'autre part, l'élimination du bouche-pore peut léser la couche.

La demande de brevet français FR-A- 2542211 propose de choisir pour la couche polymérique d'un dispositif de filtration de gaz un polyphosphazène avantageux pour sa température.

Le procédé de dépôt, analogue au procédé du brevet japonais 59/206008 précité, met en oeuvre un bouche-pore qui est l'huile de paraffine et qui a pour fonction de rendre la surface du support aussi lisse qu'une glace. Après séchage de la couche déposée, l'huile de paraffine à l'état solide est extrêmement difficile à éliminer. Cette opération, déjà très délicate lorsque la face du support est plane, devient pratiquement impossible lorsque le support est un tube ou une structure de type multicanal. En outre, après disparition de l'huile de paraffine, la couche est mal accrochée sur le support et la membrane résultante a une résistance mécanique insuffisante.

Le demande de brevet européen EP-A- 0175668 décrit une autre technique de dépôt d'une couche en polyphosphazène sur un support poreux. Ce dernier est préalablement imprégné avec un liquide solvant du polyphosphazène. On observe que le polyphosphazène ensuite appliqué s'infiltre très profondément dans le support, ce qui entraîne une limitation prohibitive du débit de la membrane obtenue.

La présente invention a pour but de réaliser de manière simplifiée une membrane pour un dispositif de filtration, dont la couche support soit inorganique et dont la couche séparatrice soit organique, pénètre de façon contrôlée dans les pores de la couche support, et soit résistante mécaniquement.

La présente invention a pour objet une membrane pour dispositif de filtration, de séparation de gaz ou de liquide, de pervaporation, comportant au moins une couche poreuse en matériau inorganique choisi parmi la céramique frittée, le métal fritté, le verre fritté, le carbone, et une couche séparatrice en polyphosphazène, caractérisée par le fait que

- le diamètre moyen des pores de ladite couche poreuse en matériau inorganique est compris entre 10nm et 0,1 μm,
- ladite couche séparatrice est continue et pénètre dans ladite couche inorganique suivant une épaisseur comprise entre deux et cinq fois la valeur dudit diamètre de pores de ladite couche poreuse inorganique,
- l'épaisseur de ladite couche séparatrice est comprise entre 0,5 μm et 5 μm, avec sur toute sa surface une épaisseur constante à mieux que 10 pour cent près.

Dans certains cas ladite couche séparatrice présente sur toute sa surface une épaisseur constante à 1 pour cent près.

Ladite couche séparatrice est exempte de défauts, tels que des trous, et solidement accrochée à la couche support, comme le montrent les observations en microscopie électronique à balayage de la tranche des couches, et les tests d'arrachement par mise en pression d'un liquide qui imprègne la couche poreuse inorganique.

La présente invention a également pour objet un dispositif à membrane pour la filtration, la séparation ou la pervaporation comportant :

* un bloc macroporeux en un matériau choisi parmi la céramique frittée, le métal fritté, le verre fritté ou le carbone, percé de plusieurs canaux longitudinaux parallèles entre eux, dont la surface est recouverte d'au moins une couche poreuse en matériau inorganique et d'une couche séparatrice en matériau organique,
* des moyens d'introduction d'un fluide à épurer à la première extrémité desdits canaux,
* des moyens de recueil d'un fluide épuré situés au niveau de la surface latérale dudit bloc,
* des moyens de recueil d'un fluide résiduel à la seconde extrémité desdits canaux,

dispositif caractérisé par le fait que ladite couche poreuse en matériau inorganique et ladite couche poreuse en matériau organique sont conformes à la définition donnée plus haut.

Les polyphosphazènes sont un matériau polymérique dont la chaîne est formée par l'alternance d'atomes d'azote et de phosphore liés alternativement par une simple et une double liaison. L'atome de phosphore peut porter deux substituants organiques, R et R', qui peuvent être identiques ou différents.

De préférence on choisit un polyphosphazène de type linéaire, autrement dit l'enchaînement des atomes de phosphore et d'azote forme une chaîne (-N=P-N=P-N=P-N=), l'atome de phosphore portant les deux substituants organiques R et R'.

Trois classes de polyphosphazène peuvent être utilisées. Elles sont définies à partir des substituants R et R' portés par l'atome de phosphore. Il s'agit :

* Des poly alkyloxy phosphazènes, les subtituants R et R' étant des chaînes alkyl liées au phosphore par un atome d'oxygène ; le poly bis(trifluoro éthoxy) phosphazène est un exemple de ce type de produit.
* Des poly alkylamine phosphazènes, les subtituants R et R' étant des chaînes alkyl liées au phosphore par un atome d'azote ; le poly bis(éthyl amine) phosphazène, le poly bis(butyl amine) phosphazène sont des exemples de ce type de produit.
* Des poly aryloxy phosphazènes, les subtituants R et R' étant des noyaux benzéniques portant eux mêmes des groupes organiques en position para, les noyaux benzéniques étant liés au phosphore par un atome d'oxygène. On peut citer comme groupement substituant la position para du noyau benzénique, et sans notion limitative, les groupes indiqués dans le tableau ci-dessous :

| radical | nom |
|---|---|
| H | hydrogène |
| OH | hydroxy |
| O $CH_3$ | méthoxy |
| O $C_6H_5$ | phénoxy |
| $CH_3$ | méthyl |
| $C_2H_5$ | éthyl |
| $CH_2CH=CH_2$ | allyl |
| $CCl_3$ | trichlorométhyl |
| $CF_3$ | trifluorométhyl |

Ces produits sont disponibles dans le commerce, par exemple sous la marque ORGAFLEX* de la société ATOCHEM.

La présente invention a également pour objet un procédé de préparation d'une couche séparatrice en polyphosphazène sur une couche poreuse inorganique, caractérisé par le fait qu'il comprend trois étapes :

* la préparation d'une solution de polyphosphazène à l'aide d'un solvant de ce polymère,
* la mise en place de la couche séparatrice par dépose de ladite solution sur la surface de ladite couche poreuse inorganique préalablement imprégnée d'un liquide non-solvant du polyphosphazène,
* le séchage de la couche séparatrice en polyphosphazène.

Le polyphosphazène peut être dissous dans au moins un solvant polaire choisi parmi :

* les alcools,par exemple le méthanol
* les cétones, par exemple l'acétone ou la méthyl éthyl cétone
* les esters, par exemple l'acétate d'éthyle
* les éthers, par exemple le tétrahydrofurane ou le diéthyle éther
* les hydrocarbures aromatiques, par exemple le benzène ou le toluène.

La dissolution peut se faire à chaud, ou à la température ambiante selon le polymère et le solvant, avec agitation.

La concentration en polyphosphazène de la solution est l'un des paramètres permettant de régler sa viscosité. Certains solvants permettent d'atteindre une concentration de 50% en masse. La viscosité peut ainsi monter jusqu'à 200mPa.s.

La formation de la couche active en polyphosphazène se fait suivant la technique de l'inversion de phase. Pour cela, on prépare la couche support inorganique qui doit recevoir la couche en polyphosphazène en l'imprégnant d'un liquide non-solvant du polyphosphazène. La présence de ce non-solvant dans la couche support permet, en plus de son rôle actif dans la formation de la couche de polyphosphazène, le contrôle de la pénétration du polyphosphazène dans sa couche support inorganique. Ce contrôle est dû à la physico-chimie du mécanisme de dépose de l'inversion de phase et à son adaptation au support poreux. On peut choisir par exemple l'eau, les amines telles que la tripentyl amine, les nitriles tels que l'acétonitrile, les hydrocarbures liquides, tels que l'hexane.

L'imprégnation peut être faite par n'importe quel moyen classique, tel que trempé, pulvérisation ; il peut s'agir également d'une circulation dans le ou les canaux d'un dispositif de filtration.

On réalise ensuite la dépose de la couche séparatrice par enduction de la couche poreuse inorganique, ou remplissage des canaux dans le cas d'un dispositif multicanal. La solution polymérique est laissée en contact pendant une certaine durée avec la couche poreuse inorganique, après quoi la vidange des canaux est effectuée. Pendant la mise en contact de la solution polymérique avec le non-solvant, le polyphosphazène en solution précipité. Ce mécanisme de préparation correspond à une inversion de phase : il nécessite la présence du polymère dissous dans un solvant et un liquide non-solvant, au contact duquel le polymère précipite.

On peut illustrer ce processus par un diagramme ternaire de solubilité solvant-polymère-non-solvant. On définit deux zones extrêmes : une zone solution (mélange polymère-solvant), une zone mélange liquide-solide (mélange polymère-non-solvant). Lors de l'introduction du non-solvant dans la solution polymérique, il y a précipitation du polymère pour former une phase solide continue. Dans le cas de la présente invention, le non-solvant est contenu dans les pores de la couche support inorganique. Lors de la mise en contact de la solution polymérique avec le non-solvant, il y a transport du polyphosphazène dans les pores où il précipite en premier lieu. Ainsi, le non-solvant présent dans les pores favorise l'accrochage de la couche polymérique sur son support. Comme de plus, il provoque la précipitation rapide du polymère dans les pores de la couche poreuse inorganique, il empêche la pénétration profonde du polymère. Ainsi, grâce à la présence du non-solvant dans le réseau poreux de la couche poreuse inorganique, il est possible de contrôler la pénétration du polymère et donc les caractéristiques finales de la membrane.

L'épaisseur de la couche déposée est réglée au moyen de la durée de contact et de la concentration en polyphosphazène de la solution.

Enfin on sèche la couche séparatrice. Le polyphosphazène ayant coagulé au moment de la formation de la couche, les conditions d'évaporation du solvant et du non-solvant ne sont pas critiques. Pour des raisons de commodité, on utilise de préférence comme non-solvant l'eau et comme solvant un composé plus volatile que l'eau.

La réalisation de la membrane par le procédé de l'inversion de phase qui vient d'être décrit, conduit à un procédé de fabrication plus simple que ceux de l'art antérieur (en particulier celui de FR-A- 2542211) et facilement industrialisable, car il ne demande aucune manipulation minutieuse. De plus, les membranes obtenues peuvent être utilisées immédiatement sans traitement additionnel.

On peut régler les caractéristiques des couches en polyphosphazène selon l'invention en agissant sur les paramètres suivants :
* la nature du polymère et des substituants portés par l'atome de phosphore,
* la nature du solvant,
* la nature du non-solvant utilisé pour la coagulation,
* la concentration de la solution polymérique,
* le diamètre de pore et les caractéristiques de la couche support inorganique poreuse,
* les conditions de dépose de la couche de polyphosphazène.

Dans une première variante du procédé, on ajoute à la solution de polyphosphazène un additif (dans une proportion inférieure à 10% en poids) pouvant initier la formation de pores de très petite taille dans la couche de polyphosphazène. Cet additif est dénommé porogène. Dans ce but, on peut utiliser des composés organiques tels que les PEG (polyéthylène glycol), les polyvinylpyrrolidones, les dérivés de la cellulose ou la glycérine.

On réalise la mise en place de la couche en polyphosphazène suivant le procédé décrit ci-dessus. Lors de la mise en place de la membrane, la coagulation du polyphosphazène se fait en englobant les porogènes. Ces derniers forment des inclusions dans la couche en polyphosphazène. Après séchage de la couche en polyphosphazène, les porogènes sont éliminés par lavage, ils donnent ainsi naissance à des micropores. La nature et la taille du composé porogène a une influence sur les caractéristiques de la couche en polyphosphazène obtenue.

Dans une deuxième variante du procédé, on utilise un polyphosphazène ayant une structure permettant sa réticulation. Ainsi on peut mettre en oeuvre un polyaryloxyphosphazène comportant, en plus des substituants R et R', des noyaux benzéniques liés au phosphore au travers d'un atome d'oxygène et portant eux-mêmes une chaîne insaturée, du type vinyl, allyl, butényl. On peut également mettre en oeuvre comme polyphosphazène un polyaryloxyphosphazène, lesdits substituants R et R' étant des groupements phénoxy portant eux-mêmes des groupements organiques en position para et possédant des hydrogènes labiles, tels que des groupements de type OH.

On ajoute à la solution de polyphosphazène un agent de réticulation tel qu'un peroxyde. Les peroxydes les plus couramment employés comme agent de réticulation sont le peroxyde de benzoyle, le bis (tertio butylperoxy) 2,2 butane, le terbutylcumyle peroxyde, le diméthyl 2,5 bis (ter-butylperoxy) 2,5 hexane ou le carbonate d'isopropyl et de peroxytert-butyle, cette liste n'étant pas exhaustive.

Ces produits sont employés, de préférence, à une teneur inférieure à 5% massique par rapport au polyphosphazène dans la solution de polymère. On réalise la mise en place de la couche en polyphosphazène suivant le procédé décrit ci-dessus dans la version de base. Après séchage de la couche, on procède à une cuisson de réticulation dont le but est de relier les chaînes polyphosphazène entre elles. Les conditions de réticulation (durée et température) sont fonction de la nature et de la teneur en peroxyde. Les paramètres de la cuisson de réticulation ont une influence sur les caractéristiques de la couche en polyphosphazène obtenue.

Dans une troisième variante du procédé, on utilise une solution de polyphosphazène contenant simultanément un agent de réticulation, et un composé organique porogénique. La préparation de la couche s'effectue comme décrit ci-dessus. Elle comprend alors l'élimination du porogène et la cuisson de réticulation, le lavage pouvant être effectué avant ou après la cuisson.

Dans une quatrième variante du procédé défini ci-dessus appliquée à un bloc microporeux multicanal, un séchage des extrémités du bloc support inorganique poreux est réalisé avant la dépose de la couche en polyphosphazène. Après l'imprégnation par le non-solvant, on sèche le support sur une longueur de quelques millimètres à quelques centimètres à chaque extrémité de celui-ci. Ce séchage est réalisé à l'aide de techniques classiques, telles que four annulaire, lampe infrarouge, air soufflé,... La dépose de la couche polymérique est alors effectuée. La solution de polymère pénètre la partie sèche du support inorganique poreux. Cette technique permet de remplir les extrémités du bloc support inorganique poreux par le polyphosphazène coagulé et totalement infiltré dans la structure poreuse. Ce remplissage permet de réduire ou d'éliminer les fuites du fluide à traiter par passage direct de la région amont de la membrane à la région aval, au travers de la porosité grossière du support inorganique poreux.

Cette dernière variante du procédé peut être combinée avec l'une quelconque des trois variantes précédentes.

D'autres caractéristiques et avantages de la présente invention apparaîtront au cours de la description suivante de modes de réalisation donnés à titre illustratif, mais nullement limitatif.

EXEMPLE 1 :

Un bloc de céramique poreuse de géométrie prismatique percé de 19 canaux de quatre millimètres de diamètre est utilisé comme support. La surface de chaque canal est recouverte d'une couche en céramique poreuse d'un diamètre moyen de pore de 0,05 micron. Ce support est plongé dans un bac contenant de la tripentyl amine, pendant deux heures pour imprégner la porosité du support par ce produit.

On prépare par dissolution au bain-marie à environ 60°C une solution de polyphosphazène contenant :
- 50% pondéraux de méthanol,
- 50% pondéraux de poly bis(trifluoro éthoxy) phosphazène.

Cette solution est refroidie, filtrée sur un tamis en nylon (avec une ouverture de maille de 10 microns), puis dégazée.

Immédiatement après l'imprégnation du support par la tripentyl amine, on effectue la mise en place de la couche. Pour cela, on remplit les canaux du bloc poreux en céramique avec la solution de poly bis (trifluoroéthoxy) phosphazène dans le méthanol. On laisse la solution dans les canaux du support pendant deux minutes (le polyphosphazène coagulant pendant cette période). Après cette durée, les canaux du bloc support sont vidés. La couche en polyphosphazène coagulée est séchée à 40°C pendant 24 heures.

L'observation par microscopie électronique à balayage des couches en poly bis(trifluoro éthoxy) phosphazène montre, d'une part, que le polymère est infiltré de plus de 0,2 $\mu$m dans les pores de la couche poreuse en céramique sur laquelle est déposée la couche en polyphosphazène et, d'autre part, que son épaisseur de 5 microns est constante. La liaison entre la couche céramique et la couche en polyphosphazène est solide. Un test d'arrachement de type classique, réalisé par la mise en pression de la couche, ne permet pas de décoller cette couche. Ce test consiste à pousser une masse de liquide de la porosité du support poreux en céramique vers la couche en polyphosphazène. Il est décrit en détail dans l'article de S. GALAJ, A. WICKER, J.P. DUMAS, J. GILLOT, D. GARCERA, "Microfiltration tangentielle avec décolmatage sur membranes céramiques", Le Lait 64 (1984) 129-140.

Cette membrane est testée en pervaporation sur un mélange binaire benzène-cyclohexane contenant 5% pondéral de benzène. On obtient un perméat présentant un enrichissement en benzène d'un facteur 12.

EXEMPLE 2 :

Un tube poreux en métal fritté et présentant un diamètre moyen de pore de 0,1 micron est trempé dans un bac contenant de l'acétonitrile afin d'emplir sa porosité avec ce liquide. Ce trempage dure 30 minutes.

On réalise d'autre part une solution de polyphosphazène par dissolution de 20g de poly bis(éthyl amine) phosphazène dans 80g de toluène, soit une solution contenant :
- 20% pondéraux de poly bis(éthyl amine) phosphazène,
- 40% pondéraux de toluène,
- 40% pondéraux de xylène.

Après dissolution, la solution est filtrée sur un tamis en nylon (ouverture de maille 10 microns), puis dégazée.

Sur le support fraîchement imprégné par l'acétonitrile, on sèche les extrémités du tube en métal fritté, sur un centimètre, à l'aide d'un courant d'air chaud. On effectue la mise en place de la couche. Le canal formé par le tube en métal fritté est rempli par la solution de polyphosphazène dans le mélange toluène xylène. Le canal reste plein pendant 30 secondes, puis est vidé. La couche en polyphosphazène est séchée pendant 48 heures à la température ambiante dans une pièce ventilée.

L'observation par microscopie électronique en balayage de la couche en polyphosphazène montre une couche continue. L'épaisseur de la couche, mesurée à partir de l'observation de la tranche, est de 3 microns. On observe une pénétration de la couche en polyphosphazène dans le support en métal fritté de 0,5 $\mu$m, à l'exception des extrémités du tube en métal fritté qui sont totalement imprégnées par le poly bis-(éthyl amine) phosphazène, permettant ainsi d'éliminer les risques de court-circuit des fluides à traiter.

Sur cette membrane on teste la séparation d'un mélange $CO_2$ -$CH_4$. On obtient un facteur de séparation de $\alpha$ $CO_2/CH_4$ = 21.

EXEMPLE 3 :

On utilise un tube en carbone poreux de diamètre interne 6mm, recouvert d'une couche en céramique poreuse dont les pores ont un diamètre moyen de 20nm. On fait circuler à l'aide d'une pompe de l'hexane dans le canal du tube, de manière à remplir totalement la porosité du tube céramique. Cette opération dure une demi-heure.

On prépare une solution de poly bis (p-hydroxy-phénoxy) phosphazène en dissolvant 5g de ce polymère dans 95g d'acétate d'éthyl au bain-marie à 40°C, soit une solution contenant :
- 5% pondéraux de poly bis (p-hydroxy phénoxy) phosphazène,
- 95% pondéraux d'acétate d'éthyl.

Après refroidissement, on ajoute un agent de réticulation : le bis (tertio butyl peroxy) 2,2 butane à raison de 1,5% par rapport au polyphosphazène. La solution est filtrée sur un tamis en nylon (ouverture de maille 10 microns), puis dégazée.

On effectue la mise en place de la couche en polyphosphazène sur le tube fraîchement imprégné d'hexane. Le canal formé par le tube est rempli par la solution de polyphosphazène. Le tube est vidé après une durée de 2 secondes. La couche en polyphosphazène est mise à sécher à la température de 40°C pendant 48 heures.

Après séchage, on réticule la couche en la cuisant 1 heure à 160°C. La couche en polyphosphazène est observée en microscopie électronique à balayage. La surface de la couche ne présente pas de défaut ; l'épaisseur observée sur la tranche est de 0,5 micron, cette épaisseur restant constante tout au long du tube. La pénétration de la couche en polyphosphazène dans le tube est de 0,06 $\mu m$.

Un test de tenue mécanique est fait par poussée de liquide au travers de la porosité vers la couche en polyphosphazène. La couche en polyphosphazène n'est pas arrachée par ce type de test.

Cette membrane est testée en ultrafiltration avec une solution aqueuse de divers PEG (polyéthylène glycol). On obtient un débit de 17 l/h m$^2$ sous une pression transmembranaire de 15 bars. Le seuil de coupure de cette membrane est de 500 Daltons.

EXEMPLE 4 :

On utilise un bloc en céramique poreuse tel que décrit dans l'exemple 1 et dont la surface interne des canaux est recouverte par une couche en céramique poreuse dont le diamètre moyen des pores est de 10nm. On imprègne le support d'eau, en le plongeant dans un bac pendant une durée de 2 heures, de façon à complètement remplir la porosité de ce bloc.

On prépare une solution de polyphosphazène en dissolvant à 60°C dans de la méthyl éthyl acétone un poly aryloxy phosphazène. La solution a la composition suivante :
- 10% pondéraux de poly (p-éthylphénoxy, p-éthylphénoxy, o-allyl phénoxy), polyphosphazène,
- 90% pondéraux de méthyl éthyl cétone.

Le groupement o-allyl phénoxy représente environ 10% des groupements du polyphosphazène.

Après refroidissement de la solution, on ajoute un agent de réticulation : le tert-butylcumyl peroxyde, à raison de 3% pondéraux par rapport au polyphosphazène. La solution est filtrée sur un tamis en nylon à maille 10 microns, puis dégazée.

On dépose la couche en polyphosphazène sur le support immédiatement après son imprégnation à l'eau, en remplissant les canaux du bloc en céramique poreuse avec la solution en polyphosphazène. La durée de contact est de 15 secondes, puis les canaux sont vidés. La couche en polyphosphazène coagulée est séchée 24 heures à la température ambiante.

Après séchage, on réticule la couche en polyphosphazène en réalisant une cuisson à 180°C pendant 30 minutes.

La couche en polyphosphazène est bien liée au support céramique. Le test d'arrachement décrit dans l'exemple 1 ne provoque pas de dégradation de la couche. L'épaisseur mesurée par observation en microscopie électronique à balayage est de 0,7 micron et l'infiltration de la couche polyphosphazène dans les pores de la couche support est de 50nm.

Un test de filtration avec une solution modèle de PEG (polyéthylène glycol) donne un débit de 62 l/hm$^2$ sous une pression transmembranaire de 15 bars, et un seuil de coupure de 300 Daltons.

EXEMPLE 5 :

On utilise un tube en verre de 4 millimètres de diamètre intérieur, et dont le diamètre moyen des pores est de 10nm. Le support est imprégné par du pentane par trempage dans un bac durant 3 heures.

On prépare une solution de poly bis (p-trifluorométhyl phénoxy) phosphazène en dissolvant 5g de ce polymère dans un mélange comprenant 60g de n-propanol et 35g d'éther éthylique.

Après dissolution, on ajoute à la solution 0,5g de polyéthylène glycol ayant une masse moléculaire de 400 daltons.

On effectue la mise en place de la couche sur le support fraîchement imprégné d'hexane suivant la technique décrite dans l'exemple 1. La durée de ce contact est de 1 minute.

Après le séchage (24 heures à la température ambiante), la couche en polyphosphazène est lavée à l'eau de façon à éliminer le polyéthylène glycol et à former une microporosité.

Le test d'arrachement décrit à l'exemple 1 ne provoque pas de dégradation de la couche. L'observation en microscopie électronique à balayage de la tranche des couches montre une couche continue, infiltrée dans la porosité du support de 30nm, et d'épaisseur 1,5 micron homogène tout au long du tube de verre.

Un test de filtration est réalisé avec une solution modèle de dextrans. Le flux obtenu est de 1250 l/h m$^2$ sous une pression de 10 bars, avec un seuil de coupure de 2500 Daltons.

EXEMPLE 6 :

On utilise un tube en céramique poreuse de diamètre interne 15mm, recouvert de plusieurs couches en céramique poreuse. Le diamètre moyen des pores de la couche superficielle est de 70nm.

On imprègne ce support par de la n-butyl amine en faisant circuler ce solvant dans le canal à l'aide d'une pompe, et cela pendant 15 minutes.

On réalise par ailleurs une solution de poly bis (éthyl phénoxy) phosphazène dans l'acétone.

On ajoute à la solution précédente un composé porogène : la polyvinylpyrrolidone (masse moléculaire 1000 daltons).

On réalise ainsi une solution de composition :
- 14% pondéraux de poly bis (éthyl phénoxy) phosphazène,
- 1% pondéral de polyvinylpyrrolidone,
- 85% d'acétone.

On sèche l'extrémité du tube en céramique sur un centimètre, en l'introduisant dans un four annulaire, sans sécher la totalité du tube. On réalise la mise en place de la couche en suivant la technique décrite dans l'exemple 1, la durée de contact étant de deux minutes. Après vidange, la couche est séchée à 35°C pendant 36 heures.

Après séchage, on procède au lavage de la couche par l'eau pour éliminer le porogène. Cette élimination se fait en procédant à la filtration d'eau.

Les couches sont observées en microscopie électronique à balayage. La surface de la couche ne présente pas de défaut, l'épaisseur observée sur la tranche est de 2,5 microns tout au long du tube. L'observation en microscopie électronique à balayage montre une pénétration du polyphosphazènes dans la porosité du support sur une profondeur de 0,15 $\mu$m, et cela à l'exception des extrémités du support dont les pores sont remplis de polyphosphazène. Ce remplissage permet d'éliminer les risques de communication de la chambre amont contenant le fluide à épurer, vers la chambre aval. De plus, un test mécanique réalisé dans des conditions décrites dans l'exemple 1 ne permet pas de détecter un arrachement de la couche.

Un test de filtration sur une solution modèle de dextrans donne un flux de 2600 l/h m$^2$, avec une pression transmembranaire de 10 bars. Le seuil de coupure correspond à une masse moléculaire de 7000 Daltons.

EXEMPLE 7 :

On utilise un bloc en céramique poreuse tel que décrit dans l'exemple 1 et dont la surface interne des canaux est recouverte d'une couche en céramique poreuse ayant un diamètre de pore moyen de 50nm. On imprègne ce bloc d'eau en le trempant pendant deux heures dans un bac. On sèche l'extrémité du bloc sur une longueur de 5 millimètres à l'aide d'un courant d'air chaud.

On prépare par ailleurs une solution de poly (p-éthyl phénoxy, p-hydroxy phénoxy) phosphazène en dissolvant le polymère dans un mélange de méthyl cétone et d'acétate d'éthyl. On obtient ainsi une solution de composition :
- 10% pondéraux de poly (p-éthyl phénoxy, p-hydroxy phénoxy) phosphazène,
- 44,5% pondéraux de méthyl éthyl cétone,
- 44,5% pondéraux d'acétate d'éthyl,
- 1,0% pondéral de bis (tertio butyl peroxy) 2,2 butane.

Ce dernier composé est un agent de réticulation des polyphosphazènes, à hydrogène labile.

On dépose la couche en polyphosphazène en suivant la technique décrite dans l'exemple 1. La durée de contact est de 1,30mn. Après vidange des canaux, la couche est séchée à la température ambiante pendant 24 heures. La réticulation du polymère est ensuite obtenue par cuisson à 160°C pendant 1 heure.

La couche en polyphosphazène est caractérisée par sa tenue mécanique au test d'arrachement décrit dans l'exemple 1. L'observation en microscopie électronique à balayage de la tranche des couches montre que la pénétration de la couche polymérique dans le support céramique est de 0,15 $\mu$m. D'autre part, la couche a une épaisseur constante et homogène de 1 micron.

Un test de filtration avec une solution modèle de PEG (polyéthylène glycol) donne un débit de 44 l/h m$^2$ sous une pression transmembranaire de 20 bars et un seuil de coupure de 150 Daltons.

EXEMPLE 8 :

On utilise un tube en céramique tel que décrit dans l'exemple 6, le diamètre moyen des pores de la couche superficielle étant de 50nm. On fait circuler dans le canal du tube de l'eau à l'aide d'une pompe. On imprègne ainsi la porosité du tube. L'extrémité du tube est séchée à l'aide d'un four annulaire sur une longueur de deux centimètres.

On prépare par ailleurs une solution contenant un poly allyl aryloxy phosphazène, un peroxyde comme agent de réticulation et de la glycérine comme agent porogène.

On obtient ainsi une solution contenant :
- 12% pondéraux de poly bis (allyl phénoxy) phosphazène,
- 1% pondéral de diméthyl 2,5 bis (ter butyl peroxy),
- 3% pondéraux de glycérine,
- 84% pondéraux de tétrahydrofurane.

La couche en polyphosphazène est mise en place suivant la technique décrite dans l'exemple 1 ; le temps de contact est de 30 secondes. Après vidange des canaux, la couche est séchée à 30°C pendant 24 heures.

On procède dans un premier temps à la réticulation du polyphosphazène par cuisson à 150°C pendant 2 heures. Après refroidissement, on procède à l'élimination du porogène. Pour cela, on réalise une filtration d'eau dans le but de laver la couche organique. (On peut inverser l'ordre de ces 2 opérations).

La couche séparatrice est observée en microscopie électronique à balayage. L'épaisseur mesurée sur la tranche est de 3 microns, elle est constante et homogène. Cette couche polymérique pénètre dans sa couche support sur une profondeur de 0,1 $\mu$m, à l'exception des extrémités du tube céramique où le séchage préalable de l'eau a permis le remplissage de la porosité d'extrémité par le polymère.

Un test de filtration réalisé à l'aide d'une solution modèle de polyéthylène glycol donne un débit de 950 l/h m$^2$ sous une pression transmembranaire de 10 bars, avec un seuil de coupure de 1500 Daltons.

Bien entendu l'invention n'est pas limitée aux exemples décrits ci-dessus. On pourra, sans sortir du cadre de l'invention remplacer tout moyen par un moyen équivalent.

## Revendications

1. Membrane pour dispositif de filtration, de séparation de gaz ou de liquide, de pervaporation, comportant au moins une couche poreuse en matériau inorganique choisi parmi la céramique frittée, le métal fritté, le verre fritté, le carbone, et une couche séparatrice en polyphosphazène, caractérisée par le fait que
   - le diamètre moyen des pores de ladite couche poreuse en matériau inorganique est compris entre 10nm et 0,1 $\mu$m,
   - ladite couche séparatrice est continue et pénètre dans ladite couche inorganique suivant une épaisseur comprise entre deux et cinq fois la valeur dudit diamètre de pores de ladite couche poreuse inorganique,
   - l'épaisseur de ladite couche séparatrice est comprise entre 0,5 $\mu$m et 5 $\mu$m, avec sur toute sa surface une épaisseur constante à mieux que 10 pour cent près.

2. Membrane selon la revendication 1, caractérisée par le fait que ladite couche séparatrice présente sur toute sa surface une épaisseur constante à 1 pour cent près.

3. Membrane selon l'une des revendications précédentes, caractérisée par le fait que ledit polyphosphazène est de type linéaire, c'est-à-dire que les atomes de phosphore et d'azote forment une chaîne, chaque atome de phosphore portant deux substituants organiques R et R'.

4. Membrane selon la revendication 3, caractérisée par le fait que ledit polyphosphazène est un polyalkloxyphosphazène, lesdits substituants R et R' étant des chaînes alkyl liées au phosphore par un atome d'oxygène.

5. Membrane selon la revendication 4, caractérisée par le fait que ledit polyphosphazène est le poly bis (trifluoroéthoxy), phosphazène.

6. Membrane selon la revendication 3, caractérisée par le fait que ledit polyphosphazène est un polyalkylamine phosphazène, les substituants R et R' étant des chaînes alkyl liées au phosphore par un atome d'azote.

7. Membrane selon la revendication 6, caractérisée par le fait que ledit polyphosphazène est choisi parmi le poly bis (éthylamine) phosphazène et le poly bis(butylamine) phosphazène. phosphazène et le poly bis(butylamine) phosphazène.

8. Membrane selon la revendication 3, caractérisée par le fait que ledit polyphosphazène est un polyaryloxyphosphazène, les substituants R et R' étant des noyaux benzéniques portant eux-mêmes des groupes organiques en position para, lesdits noyaux benzéniques étant liés au phosphore par un atome d'oxygène.

9. Membrane selon la revendication 8, caractérisée par le fait que lesdits groupes organiques en position para sont choisis parmi l'hydrogène et les radicaux hydroxy, méthoxy, phénoxy, méthyl, éthyl, allyl, trichlorométhyl, trifluorométhyl.

10. Dispositif à membrane pour la filtration, la séparation ou la pervaporation comportant :
   * un bloc macroporeux en un matériau choisi parmi la céramique frittée, le métal fritté, le verre fritté ou le carbone, percé de plusieurs canaux longitudinaux et parallèles entre eux, dont la surface est recouverte d'une membrane,
   * des moyens d'introduction d'un fluide à épurer à la première extrémité desdits canaux,
   * des moyens de recueil d'un fluide épuré situés au niveau de la surface latérale dudit bloc,
   * des moyens de recueil d'un fluide résiduel à la seconde extrémité desdits canaux,
   dispositif caractérisé par le fait que ladite membrane est conforme à l'une des revendications 1 à 9.

11. Procédé de préparation d'une membrane selon la revendication 1, caractérisé par le fait qu'il comporte trois étapes :
   * la préparation d'une solution de polyphosphazène à l'aide d'au moins un solvant de ce polymère,
   * la mise en place de ladite couche séparatrice par dépose de ladite solution sur ladite couche poreuse inorganique préalablement imprégnée d'un liquide non-solvant du polyphosphazène,
   * le séchage de ladite couche séparatrice.

12. Procédé de préparation selon la revendication 11, caractérisé par le fait que ledit polyphosphazène est dissous dans au moins un solvant choisi parmi les alcools, les cétones, les esters, les éthers, les hydrocarbures aromatiques.

13. Procédé selon l'une des revendications 11 et 12, caractérisé par le fait que ledit liquide non-solvant du polyphosphazène, destiné à imprégner ladite couche poreuse inorganique, est choisi parmi l'eau, les amines, les nitriles, les hydrocarbures liquides.

14. Procédé selon l'une des revendications 11 à 13, caractérisé par le fait que l'on ajoute à ladite solution de polyphosphazène, dans une proportion inférieure à 10% en poids, un porogène choisi parmi les polyéthylènes glycol, les polyvinylypyrrolidones, les dérivés de la cellulose, les dérivés de la glycérine, ledit porogène se trouvant éliminé au cours d'une étape de lavage additionnelle.

15. Procédé selon l'une des revendications 11 à 14, caractérisé par le fait que, le polyphosphazène ayant une structure permettant sa réticulation, on ajoute à ladite solution un agent de réticulation dans une proportion inférieure à 5% en poids, et on fait suivre l'étape de séchage d'une opération de cuisson de réticulation.

16. Procédé selon la revendication 15, caractérisé par le fait que l'on choisit comme polyphosphazène un polyaryloxyphosphazène, les substituants R et R' étant des noyaux benzéniques liés au phosphore par un atome d'oxygène, et portant eux-mêmes des groupes organiques en position para choisis parmi l'hydrogène et les radicaux hydroxy, méthoxy, phénoxy, méthyl, éthyl, allyl, trichlorométhyl, trifluorométhyl, ledit polyaryloxyphosphazène comportant en plus desdits substituants R et R', des noyaux benzéniques liés au phosphore au travers d'un atome d'oxygène et portant eux-mêmes une chaîne insaturée.

17. Procédé selon la revendication 15, caractérisé par le fait que ladite chaîne insaturée est du type vinyl, allyl, butényl.

18. Procédé selon la revendication 15, caractérisé par le fait que l'on choisit comme polyphosphazène un polyaryloxyphosphazène, lesdits substituants R et R' étant des groupements phénoxy portant eux-mêmes des groupements organiques en position para et possédant des hydrogènes labiles.

19. Procédé selon la revendication 18, caractérisé par le fait que lesdits groupements sont du type OH.

**20.** Procédé selon l'une des revendications 15 à 19, caractérisé par le fait que ledit agent de réticulation est un peroxyde choisi parmi le peroxyde de benzoyle, le bis (tertio butylperoxy) 2,2 butane, le ter butylcumyle peroxyde, le diméthyl 2,5 bis (ter-butylperoxy) 2,5 hexane, le carbonate d'isopropyl et le peroxyter-butyle.

**21.** Procédé selon l'une des revendications 11 à 20 appliqué à un dispositif à membrane de type multicanal, caractérisé par le fait que, avant la dépose de ladite couche séparatrice à l'intérieur des canaux, on sèche les extrémités de ces canaux préalablement imprégnées dudit liquide non-solvant de manière que ladite solution de polyphosphazène puisse y pénétrer au cours de la dépose.

Office européen
des brevets

**RAPPORT DE RECHERCHE EUROPEENNE**

Numero de la demande

EP    92 10 0867
Page 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| D,X | FR-A-2 542 211 (NIPPON OIL COMP LTD)<br><br>* abrégé; revendications 1-5,9-17 *<br>* page 5, ligne 29 - ligne 35 *<br>* page 7, ligne 5 - ligne 24 *<br>* page 15, ligne 19 - ligne 26 *<br>* page 16, ligne 14 - page 17, ligne 14 *<br>* exemples 1,2,4,18 * | 1-9,<br>11-13,<br>15-18,20 | B01D71/72<br>B01D69/10<br>B01D69/12<br>C08G79/02<br>B01D67/00<br>B01D63/06 |
| Y | --- | 14 | |
| A | US-A-3 762 566 (DEL PICO)<br>* abrégé *<br>* colonne 3, ligne 14 - ligne 18 *<br>* colonne 6, ligne 40 - ligne 54 *<br>* colonne 8, ligne 13 - ligne 17 *<br>--- | 11-13 | |
| D,X | EP-A-0 175 668 (MONSANTO COMP)<br>* abrégé; revendications 1,3,7 *<br>* page 4, ligne 23 - page 5, ligne 1 *<br>* page 8, ligne 32 - ligne 34 *<br>* exemples 5,6,12 * | 1-5 | |
| Y | --- | 10-13 | |
| Y | EP-A-0 288 380 (COMM A L'ENERGIE ATOMIQUE)<br>* abrégé; revendications 1-4,9,15,19 *<br>* colonne 2, ligne 3 - ligne 27 *<br>* colonne 5, ligne 43 - ligne 57 * | 10-13 | |
| A | --- | 1 | |
| Y | US-A-4 749 489 (ALLEN)<br>* abrégé *<br>* colonne 3, ligne 17 - ligne 67 *<br>* colonne 4, ligne 33 - ligne 42 *<br>* exemples 4,5 * | 14 | |
| A | --- | 1,3-8,<br>11,12 | |

-/--

**DOMAINES TECHNIQUES RECHERCHES (Int. Cl.5 )**

B01D
C08G

Le présent rapport a été établi pour toutes les revendications

| Lieu de la recherche | Date d'achèvement de la recherche | Examinateur |
|---|---|---|
| LA HAYE | 06 MAI 1992 | HOORNAERT P.G.R. |

Office européen
des brevets

**RAPPORT DE RECHERCHE EUROPEENNE**

Numero de la demande

EP    92 10 0867
Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | 1st Conf. on Inorganic Membranes 3-6 juillet 1989, Montpellier ,Fr. ; pages 55-64 C. GUIZARD et.al. : " A New Generation of Membranes based on organic-inorganic polymers." * page 55, ligne 1 - page 57, ligne 11 * * page 59, alinéa 1 * * page 61, ligne 1 - ligne 8; figure 1 * --- | 1,3 | |
| A | EP-A-0 150 700 (MONSANTO COMP) * abrégé; revendications * * page 22, ligne 5 - ligne 9 * * page 24, ligne 4 - ligne 19 * * page 26, ligne 8 - ligne 15 * --- | 1,3-8, 11,12, 15,16,20 | |
| A | FR-A-2 478 482 (LIDORENKO) * revendications 1-3; figure 1; exemples * * page 10, ligne 12 - page 11, ligne 29 * --- | 1,2 | |
| P,X | WORLD PATENTS INDEX LATEST Section Ch, Week 9149, Derwent Publications Ltd., London, GB; Class A, AN 91-361383 & US-A-5 066 398 (SOC. DES CERAMIQUES TECHNIQUES) 19 Novembre 1991 * abrégé * ----- | 1-21 | **DOMAINES TECHNIQUES RECHERCHES (Int. Cl.5)** |

Le présent rapport a été établi pour toutes les revendications

| Lieu de la recherche | Date d'achèvement de la recherche | Examinateur |
|---|---|---|
| LA HAYE | 06 MAI 1992 | HOORNAERT P.G.R. |

EPO FORM 1503 03.82 (P0402)